# EUROPÄISCHE PATENTSCHRIFT

(11) **EP 0 249 271 B1**
(45) Veröffentlichungstag und Bekanntmachung des Hinweises auf die Patenterteilung: **03.02.1993**
(21) Anmeldenummer: 87200980.8
(22) Anmeldetag: 27.05.1987
(51) Int. Cl.: H02M 3/335

(54) **Eintaktdurchflusswandler**
DC-DC forward converter
Convertisseur courant continu à découpage direct

(30) Priorität: 09.06.1986 DE 3619352
(43) Veröffentlichungstag der Anmeldung: 16.12.1987
(73) Patentinhaber: Philips Patentverwaltung GmbH, 22335 Hamburg (DE); Philips Electronics N.V., 5621 BA Eindhoven (NL)
(72) Erfinder: Krahl, Burghard, D-8566 Leinburg (DE)
(74) Vertreter: Peuckert, Hermann, Dipl.-Ing.

(56) Entgegenhaltungen:
- EP-A- 0 027 171
- DE-A- 2 624 800
- JP-A- 5 641 769

## Beschreibung

Die Erfindung betrifft einen Eintaktdurchflußwandler mit einem Transformator, einem pulsbreitengesteuerten Schaltelement im Eingangskreis sowie mit einer Gleichrichterdiode und einer Freilaufdiode im Ausgangskreis.

Bei einem Durchflußwandler wird bereits während der Leitphase des pulsbreitengesteuerten Schaltelementes Energie in den ausgangsseitigen Lastkreis übertragen. Die während der Leitphase des Schaltelementes vom Transformator aufgenommene Magnetisierungsenergie ist noch im Transformator gespeichert, wenn das Schaltelement den eingangsseitigen Stromkreis jeweils wieder öffnet, weshalb der Transformator periodisch abmagnetisiert werden muß. Dies kann mittels einer zusätzlich auf den Transformator aufgebrachten sogenannten Abmagnetisierungswicklung erfolgen.

Aus JP-A-5641769 ist ein Eintaktdurchflußwandler der eingangs genannten Art bekannt. Dabei erfolgt die Abmagnetisierung des Transformators über einen parallel zur Gleichrichterdiode angeordneten Kondensator.

Aus der DE-OS 26 24 800 ist es bereits bekannt, bei einer Anordnung ohne eine solche zusätzliche Abmagnetisierungswicklung auf dem Transformator das Schaltelement im Eingangskreis mit einer Reihenschaltung aus einer Diode und einem Kondensator zu überbrücken, wobei der Diode zusätzlich noch ein Widerstand parallel geschaltet ist. Beim Öffnen des Schaltelementes übernimmt die aus der Diode und dem Kondensator bestehende Reihenschaltung den abklingenden Strom der Primärwicklung. Der Kondensator wird zunächst etwa auf den Wert der Eingangsspannung aufgeladen, wenn man den Einfluß der Streuinduktivität vernachlässigt. Die Transformatorspannung bricht zusammen und steigt während der Abmagnetisierung mit umgekehrter Polarität wieder an. Die Ummagnetisierung der Querinduktivität des Transformators über den Kondensator erzeugt während der Sperrzeit eine sinusförmige Halbschwingung, die sich am Schaltelement als Sperrspannung zur Eingangsspannung addiert. Beim nächsten Einschalten des Schaltelements wird die Ladung des Kondensators über den Widerstand und das Schaltelement abgebaut.

Die Tendenz geht bei Durchflußwandlern zur Anwendung immer höherer Schaltfrequenzen, weil hierdurch bei gleichem Bauvolumen größere Leistungen übertragen werden können. Deshalb müssen die benutzten Schaltungen auch für einen hohen Frequenzbereich von z.B. 150 kHz geeignet sein. In diesem Frequenzbereich wirkt sich die Zeitkonstante der in der bekannten Anordnung beim Abmagnetisierungsschaltelement vorgesehenen Schaltmittel als sehr störend aus, da sie eine genügend schnelle Abmagnetisierung des Transformators nicht mehr zuläßt.

Der Erfindung liegt die Aufgabe zugrunde, einen Eintaktdurchflußwandler der eingangs genannten Art anzugeben, der gegenüber der bekannten Anordnung weiter vereinfacht und insbesondere auch für höhere Schaltfrequenzen, beispielsweise im Bereich 150 kHz und darüber, geeignet ist.

Diese Aufgabe wird bei einem Eintaktdurchflußwandler der eingangs genannten Art dadurch gelöst, daß nur die Gleichrichterdiode im Sperrzustand zur Abmagnetisierung des Transformators über ihre Sperrschichtkapazität vorgesehen ist. Abmagnetisierungsmittel am eingangseitigen Schaltelement sind hierdurch nicht erforderlich.

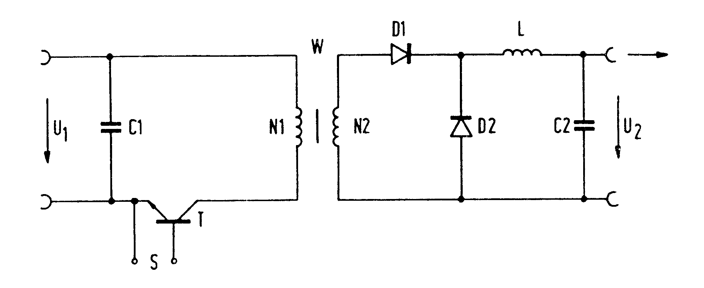

Im folgenden wird die Erfindung anhand eines in der Figur gezeigten Ausführungsbeispieles erläutert.

Die Figur zeigt einen Eintaktdurchflußwandler mit einem Transformator W, welcher lediglich eine eingangsseitige Wicklung N1 und eine ausgangsseitige Wicklung N2 besitzt. In Serie zur eingangsseitigen Wicklung N1 ist ein durch den Transistor T verkörpertes Schaltelement angeordnet. Parallel zu den Eingangsklemmen, an denen die Eingangsspannung U1 liegt, ist ein Kondensator C1 geschaltet. In Serie zur Sekundärwicklung N2 des Transformators ist eine Gleichrichterdiode D1 angeordnet, parallel zu der Anordnung aus der Gleichrichterdiode D1 und der Sekundärwicklung N2 des Transformators W liegt die Freilaufdiode D2. Ferner ist im Ausgangskreis in Serie zur Gleichrichterdiode D1 eine Induktivität L angeordnet. Parallel zu den Ausgangsklemmen, an denen die Ausgangsspannung U2 auftritt, liegt der Kondensator C2. Der Transformator W übersetzt Spannung und Strom und trennt den Ausgang vom Eingang galvanisch. Während der Leitphase des durch den Transistor T gebildeten Schaltelementes fließt der Strom vom Eingangskondensator C1 zur nicht dargestellten Last. Dabei nimmt die Induktivität L Energie entsprechend dem durchfließenden Ausgangsstrom und der Differenz zwischen übersetzter Eingangsspannung U1 und Ausgangsspannung U2 auf. Während der Sperrphase, die mindestens zur Abmagnetisierung des Transformators W ausreichen muß, fließt der Strom im Ausgangskreis aus der Induktivität L weiter über die Freilaufdiode D2 in die Last. Der Transistor T wird zwischen seiner Basis und seinem Emitter an den Klemmen S mittels eines nicht näher dargestellten Taktgebers angesteuert. Der Transistor T ist vorteilhaft als Leistungs-MOS-Transistor ausgebildet. Eine Regelung der Ausgangsspannung U2 ist dadurch möglich, daß die relative Einschaltdauer bei konstanter, durch den Taktgeber gegebenen Periodendauer verändert wird.

Der Transformator W ist vorteilhaft auf geringen Magnetisierungsstrom dimensioniert. Dies kann durch Anwendung von Ringkernen mit großer Permeabilität bzw. großem AL-Wert erreicht werden. Diese Kerne sind auch in Materialien erhältlich, die bei getakteten Stromversorgungen als Leistungsübertrager verwendet werden können. Ferner ist der Transformator W auf geringe Streuinduktivität dimensioniert.

Die Abmagnetisierung des Transformators W während der Sperrzeit erfolgt ausschließlich über die Sperrschichtkapazität der Gleichrichterdiode D1. Diese Sperrschichtkapazitäten betragen bei üblichen Gleichrichterdioden zwischen 50 und 100 pF. Es hat sich gezeigt, daß die Sperrschichtkapazität bei den einzelnen Exemplaren eines Typs sehr gering streut.

Bei Dioden mit sehr kleiner Sperrschichtkapazität kann eine Verbesserung dadurch erreicht werden, daß eine zusätzliche Parallelkapazität an die Gleichrichterdiode geschaltet wird.

Soll ein Eintaktdurchflußwandler eine weitere oder noch mehrere Spannungen abgeben, so ist es bekannt, auf der Sekundärseite des Transformators anstelle nur einer Sekundärwicklung N2 eine entsprechende Anzahl weiterer Wicklungen aufzubringen, wobei dann die Abmagnetisierung über die jeweils vorhandenen Gleichrichterdioden der den einzelnen Wicklungen zugeordneten Ausgangskreise erfolgt.

## Patentansprüche

1. Eintaktdurchflußwandler mit einem Transformator (W), mit einem pulsbreitengesteuerten Schaltelement (T) im Eingangskreis sowie mit einer Gleichrichterdiode (D1) und einer Freilaufdiode (D2) im Ausgangskreis,
dadurch gekennzeichnet,
daß nur die Gleichrichterdiode (D1) im Sperrzustand zur Abmagnetisierung des Transformators (W) über ihre Sperrschichtkapazität vorgesehen ist.

2. Eintaktdurchflußwandler nach Anspruch 1,
dadurch gekennzeichnet,
daß die Gleichrichterdiode (D1) eine Sperrschichtkapazität von 50 bis 100pF aufweist.

3. Eintaktdurchflußwandler nach einem der Ansprüche 1 oder 2,
dadurch gekennzeichnet,
daß der Eintaktdurchflußwandler einen Transformator (W) aufweist, der auf einen geringen Magnetisierungsstrom dimensioniert ist.

## Claims

1. A single-ended DC/DC converter, comprising a transformer (W), a pulsewidth-controlled switching element (T) in the input circuit, and a rectifier diode (D1) as well as a fly-wheel diode (D2) in the output circuit, characterized in that the demagnetization of the transformer (W) takes place only through the rectifier diode (D1) in its cut-off state, via its barrier layer capacitance.

2. A single-ended DC/DC converter as claimed in Claim 1, characterized in that the rectifier diode (D1) has a barrier layer capacitance of from 50 to 100 pF.

3. A single-ended DC/DC converter as claimed in Claim 1 or 2, characterized in that the single-ended DC/DC converter comprises a transformer (W) proportioned for a small magnetization current.

## Revendications

1. Convertisseur continu-continu asymétrique direct comportant un transformateur (W), un élément interrupteur (T) à commande de largeur d'impulsion compris dans le circuit d'entrée ainsi qu'une diode redresseuse (D1) et une diode de roue libre (D2) comprises dans le circuit de sortie, caractérisé en ce que seule la diode redresseuse (D1) à l'état de blocage est prévue pour la désaimantation du transformateur (W), à travers sa capacité de couche d'arrêt.

2. Convertisseur continu-continu asymétrique direct selon la revendication 1, caractérisé en ce que la diode redresseuse (D1) présente une capacité de couche d'arrêt comprise entre 50 et 100 pF.

3. Convertisseur continu-continu asymétrique direct selon la revendication 1 ou 2, caractérisé en ce qu'il présente un transformateur (W) dimensionné pour un courant d'aimantation faible.
